# FASCICULE DE BREVET EUROPEEN

(11) **EP 0 946 462 B1**
(45) Date de publication et mention de la délivrance du brevet: **05.06.2002**
(21) Numéro de dépôt: 97936725.7
(22) Date de dépôt: 31.07.1997
(51) Int. Cl.: C04B 41/61, E04F 15/12

(54) **PROCEDE DE REALISATION D'UN SOL ET SOL AINSI OBTENU**
HERSTELLUNGSVERFAHREN FÜR BODEN UND SO ERHALTENER BODEN
METHOD FOR PRODUCING A FLOOR, AND RESULTING FLOOR

(30) Priorité: 05.08.1996 FR 9610029
(43) Date de publication de la demande: 06.10.1999
(73) Titulaire: LAFARGE MATERIAUX DE SPECIALITES S.A., 92446 Issy les Moulineax (FR)
(72) Inventeur: GUERINET, Jean-Paul, F-60200 Compiègne (FR); SEGRETAIN, François, F-35600 Bains/Ouste (FR)
(74) Mandataire: Tilloy, Anne-Marie
(86) Numéro de dépôt international: FR9701437
(87) Numéro de publication internationale: WO9805603

(56) Documents cités:
- DE-A- 3 625 055
- DE-C- 4 429 785
- FR-A- 2 704 853
- DATABASE WPI Week 9527 Derwent Publications Ltd., London, GB; AN 95-204541 XP002030282 & JP 07 119 262 A (MIYAI K)
- DATABASE WPI Week 8845 Derwent Publications Ltd., London, GB; AN 88-314772 XP002030283 & AU 88131 86 A (REGONIA PTY TTD)
- CHEMICAL ABSTRACTS, vol. 110, no. 20, 15 mai 1989 Columbus, Ohio, US; abstract no. 178504v, T. SHINOHARA ET AL.: page 338; XP000019556 & JP 63 210 084 A (ID.)

## Description

La présente invention concerne un procédé de réalisation d'un sol et plus particulièrement d'un sol de bâtiment.

La présente invention concerne également le sol, et plus particulièrement un sol de bâtiment, obtenu selon le procédé de réalisation. Le procédé de réalisation d'un sol s'applique à tout type de sol, abrité ou non abrité.

Un sol de bâtiment est un sol abrité situé à l'intérieur de différents type de locaux très variés : industriels, agricoles, commerciaux, laboratoires, hôpitaux, écoles, garages, lieux publics, etc...

Un sol est composé d'au moins trois parties :
- une première partie appelée ci-dessous forme, qui peut être un sol préparé selon les règles du métier, ou n'importe quel béton ancien que l'on désire rénover.
- une deuxième partie, de support dite ci-après dalle de béton ; et
- une troisième partie, formée d'au moins une couche supérieure de revêtement, solidaire de la dalle de béton.

Ces sols doivent posséder une grande planéité et être quasiment exempt de fissurations aléatoires, de faïençage, etc. Ils doivent avoir le moins de joints possible. Certains de ces sols doivent supporter d'importantes contraintes mécaniques, telles que résistance au roulage d'engins de manutention, résistance au poinçonnement sous l'action de fortes charges, résistance en compression, résistance en flexion/traction, résistance aux chocs en cas de chute d'objets lourds, résistance aux variations de températures. Ils doivent avoir une bonne longévité.

Les sols doivent de plus offrir des qualités de confort, d'esthétique, de facilité d'entretien et de réparations.

Dans le cas des sols à rénover, il faut limiter le temps des travaux de réfection et dès lors les arrêts de l'entreprise. En effet, les contraintes économiques font que les durées d'immobilisation des surfaces d'un bâtiment lors d'un chantier doivent être les plus courtes possibles.

Dans le cas des sols neufs, la nécessité de réaliser très rapidement un sol pour un bâtiment en construction se fait de plus en plus sentir. Les contraintes économiques font que la mise en service du bâtiment doit se faire le plus rapidement possible.

### Etat de la technique

Les règles du BAEL (Béton Armé à l'Etat Limite) de Mars 1992 enseignent que le délai contractuel de durcissement d'une dalle de béton doit être de 28 jours. Ceci permet un durcissement du béton qui atteint alors une résistance mécanique suffisante pour permettre la remise en service des sols et des bâtiments.

Le Document Technique Unifié DTU 26.2 cahier 1794 de Septembre 1982 intitulé « Chapes et dalles à base de liants hydrauliques » enseigne que les chapes rapportées adhérentes sont des ouvrages en mortier de ciment, exécutés au plus tôt après que le béton du support ait commencé son durcissement. Ces chapes en mortier de ciment sont dressées à la règle, talochées et éventuellement lissées suivant l'état de surface désiré.

L'inconvénient majeur du procédé de réalisation des sols avec ces chapes rapportées est son temps de réalisation. Après le coulage du support en béton, l'ouvrier attend le début du durcissement. En pratique, la période d'attente minimale habituellement respectée avant d'entreprendre une quelconque autre action sur une dalle de béton fraîchement coulée est supérieure à une période d'attente où le béton peut supporter de légères contraintes mécaniques et est au moins égale à 8 jours. Le préjugé technique veut qu'un béton fraîchement coulé est trop récent pour subir la moindre contrainte mécanique et donc pour mettre en place une ou plusieurs couches supplémentaires et pour être remis rapidement en service.

De plus, après la pose de la chape, deux à trois opérations de surfaçage, qui prennent du temps, sont encore nécessaires.

### Exposé de l'invention

Le but est de mettre au point un procédé de réalisation très rapide d'un sol de bâtiment à couches multiples.

Suivant l'invention, un procédé de réalisation d'un sol de bâtiment est caractérisé en ce que l'on met en oeuvre les étapes successives suivantes :
a) coulage d'une dalle de béton, dont,
   - la composition du béton présente un rapport E/C compris entre 0,4 et 0,7, et dont,
   - le béton atteint, une fois durci à 28 jours, une résistance en compression minimale supérieure ou égale à 10 MPa ;
b) dépôt d'une première couche de revêtement, sur la dalle de béton fraîchement coulée dès l'instant où ladite dalle peut supporter sans détérioration le poids d'un homme marchant sur ladite dalle, la couche de revêtement étant à base d'une composition autolissante et autonivelante.

Suivant un second aspect de l'invention, un procédé de réalisation d'un sol est caractérisé en ce que l'on met en oeuvre les étapes successives suivantes :
a) coulage d'une dalle de béton dont,
   - la composition du béton présente un rapport E/C compris entre 0,4 et 0,7, et dont,
   - le béton atteint, une fois durci à 28 jours, une résistance en compression minimale supérieure ou égale à 10 MPa ;
b) dépôt d'une première couche de revêtement, sur la dalle de béton fraîchement coulée dès l'instant où le béton de la dalle a atteint une valeur de résistance à la pression comprise entre 0,15 kg/cm² et 0,4 kg/cm², la couche de revêtement étant à base d'une composition autolissante et autonivelante.

Le préjugé technique est vaincu en utilisant un béton à prise rapide. La vitesse de réalisation est encore accrue en rapportant au moins une couche de revêtement ne nécessitant pas d'opération de surfaçage.

L'expression "fraîchement coulé" signifie que le béton commence son durcissement. La première couche de revêtement rapportée est appliquée après un temps d'attente minimum. L'homme du métier sait que les températures élevées diminuent les temps de prise et qu'au contraire, les basses températures d'hiver augmentent les temps de prise. L'expression "fraîchement coulé" signifie que entre 20 et 25°C, le béton met de l'ordre de 3 h pour commencer à durcir et qu'aux alentours de +5°C, ce temps est de l'ordre de 8 h et peut aller jusqu'à 10 h. Ainsi, après cette période variable d'environ 3 h à environ 8 h, la dalle de béton pourra supporter le poids d'un homme.

L'expression sans détérioration signifie que la personne qui réalise le sol ne s'enfonce pas dans le béton. Lors de la marche, ses pieds pourront laisser de légères traces de passage à la surface de la dalle de béton. Le degré de durcissement du béton est suffisant pour que la dalle puisse être foulée par les ouvriers sans traces d'enfoncement.

On obtient cette rapidité d'exécution en raison des compositions particulières du béton. Plus précisément, le béton est formulé pour obtenir un minimum de retrait, un ressuage minimum et une prise et un début de durcissement rapide.

Le béton est caractérisé en ce que son rapport E/C est compris entre 0,4 et 0,7 et est préférentiellement compris entre 0,45 et 0,55.

La première couche de revêtement est caractérisée en ce qu'elle comprend une composition autolissante et autonivelante. Avantageusement, elle comprend, notamment, un liant hydraulique et un liant organique. Cette couche peut présenter des propriétés de résistance très importantes. Dans l'exposé qui suit, on l'appelle couche d'usure.

Selon une variante préférentielle, on prévoit une deuxième couche de revêtement à base d'une résine époxydique et d'un durcisseur, de préférence de type polyamidoamine.

Avantageusement, ce produit assure la cure et l'imprégnation de la couche d'usure. C'est également un produit qui améliore encore les résistances mécaniques de la surface de la couche d'usure. Avantageusement, c'est aussi un produit de finition et d'esthétique.

### Description détaillée de l'invention

On prépare tout d'abord la forme selon les règles données dans les Annales de l'Institut Technique du Bâtiment et des Travaux Publics N°482 Mars-Avril 1990 Série gros oeuvre 37 Travaux de dallage. On impose diverses mesures de :
- préparation et compaction de l'assise de fondation, constante sur toute sa surface,
- nivellement de l'assise,
- pose d'une feuille de matière synthétique sur l'assise.

On coule une dalle de béton sur la forme. Si la forme est de mauvaise qualité, c'est-à-dire si elle manque de cohésion ou si elle possède une faible résistance mécanique, on se réfère aux règles du BAEL (Béton Armé à l'Etat Limite) de Mars 1992 et aux règles de calcul de dallage de l'ITBTP (Institut Technique du Bâtiment et des Travaux Publics). L'épaisseur des dalles, et le cas échéant les armatures métalliques à employer, y sont précisées.

Dans le cas de la rénovation d'un sol ancien en béton, on peut soit désolidariser la dalle de béton neuve du béton ancien par exemple à l'aide d'un film plastique ou d'autres matières synthétiques, soit faire une dalle adhérente en préparant la surface, en rabotant, grenaillant, puis en déposant un primaire d'adhérence, ou tout simplement en mouillant le béton ancien. Si le béton ancien est fissuré, on pose un treillis, métallique, de verre ou en une autre matière, au droit de la fissure pour éviter toute prolongation de la fissure.

Les compositions du béton pour cette réalisation rapide de sol sont particulièrement étudiées. Les critères retenus pour les bétons de la dalle sont :
- prise rapide,
- peu de retrait,
- éventuellement armé avec une armature, en fonction des charges qu'il supportera par la suite,
- éventuellement fibré en fonction des charges qu'il supportera par la suite,
- résistance à la compression à 28 jours, supérieure à 10 MPa, de préférence supérieure à 25 MPa, encore mieux, de l'ordre de 30 MPa ou supérieure.
- plasticité supérieure à 10 cm, de préférence de 15 à 21 cm, valeurs mesurées grâce au cône d'Abrams sous essai normalisé (NF P 18-451) d'évaluation de l'ouvrabilité des bétons frais,
- ressuage minimum,
- ségrégation minimale, la masse granulats-eau-liant reste homogène.

C'est pourquoi, on choisit de préférence des formules de béton fluide, possédant la plasticité précitée. Cette plasticité va également dans le sens de la rapidité de coulage de la dalle de béton. Le liant hydraulique utilisé est de préférence un ciment Portland Artificiel. Le béton est de préférence riche en ciment. On utilise un minimum de 270 kg de ciment par m³ de béton pour une dalle de 10 à 20 cm d'épaisseur, et un minimum de 300 kg de ciment par m³ de béton pour une dalle de 4 à 10 cm d'épaisseur. La quantité de ciment est au plus égale à 450 kg/m³ de béton. De plus, la quantité d'eau est limitée pour obtenir une prise rapide. Le rapport eau/ciment (E/C) est compris entre 0,4 et 0,7. Les granulats présentent une courbe granulométrique dont le diamètre maximum des granulats n'est pas supérieur au tiers de l'épaisseur de la dalle que l'on veut obtenir. Ainsi, la courbe granulométrique est sensiblement de :
- 0 à 20 mm pour une dalle d'une épaisseur comprise entre 10 et 20 cm ;
- 0 à 8 mm pour une dalle d'une épaisseur comprise entre 4 et 10 cm.

La quantité d'éléments fins, incluant le ciment, passant au tamis de 200 µm est comprise entre 350 et 550 kg/m³ de béton. Ces éléments fins contribuent à la fluidité du béton et permettent de diminuer la quantité d'eau. Outre le ciment, ces éléments fins peuvent être des billes de verre, des fillers calcaires, siliceux, silicocalcaires, pouzzolaniques, des cendres volantes ou des mélanges de ceux-ci. Avantageusement, on ajoute des additifs dont au moins un agent fluidifiant.

On obtient ainsi un béton présentant un minimum de retrait, et pratiquement aucun ressuage. Les autres constituants varient d'un site de fabrication du béton à un autre.

Après le coulage de la dalle, on le tire à la règle, et on laisse prendre le béton pendant un temps limité. Pour détecter le temps minimum d'attente, on utilise le test d'un homme de corpulence moyenne marchant avec précaution sur la dalle sans que ses pas ne laissent de traces importantes sur ladite dalle. Il n'y a pas d'enfoncement des pieds de la personne qui marche sur la dalle. Un autre test est celui de la pression du pouce posé perpendiculairement sur la surface et qui ne doit pas s'enfoncer dans le béton de la dalle. La dalle du sol aura atteint alors une résistance suffisante pour supporter des charges légères.

A ce moment précis, la résistance à la pression est estimée par rapport au poids d'un homme de corpulence moyenne, ce qui équivaut à une pression de 0,15 kg/cm² minimum.

Ainsi, dès cet instant les travaux peuvent continuer. Avec la composition de béton utilisée, le délai d'attente est particulièrement court. Les temps constatés sont de 3 à 8 h, voire au maximum 10 h, selon la température et l'hygrométrie.

Avant le dépôt d'une couche d'usure, on réalise un surfaçage mécanique de la surface de la dalle. Cette opération sert d'abord à supprimer la laitance présente à la surface. Cette opération sert ensuite à obtenir la planéité de la surface en éliminant les irrégularités telles que bosses et creux. Cette opération sert à régulariser la porosité de la surface. Cette opération sert enfin à obtenir une rugosité adaptée en vue de créer la meilleure adhérence avec la couche de revêtement que l'on va déposer ensuite. On aboutit donc de façon très rapide à une homogénéité d'aspect et de structure.

Le délai limite d'attente est celui où l'on peut encore réaliser l'opération de surfaçage mécanique, avant le durcissement complet de la surface du béton. Le béton atteint à ce moment une résistance à la pression sensiblement égale à 0,4 kg/cm². Globalement, après 8 heures et jusqu'à 10 h de repos, sous des conditions climatiques assez défavorables selon l'homme du métier, le surfaçage ne pourra plus se faire de façon satisfaisante.

Pour la couche d'usure, on choisit une composition présentant les propriétés d'être autolissante et autonivelante. Son épaisseur est comprise entre 5 et 30 mm, et préférentiellement entre 8 et 20 mm, et encore mieux, entre 8 et 15 mm.

Le choix de la composition de la couche d'usure se fait essentiellement en fonction des caractéristiques mécaniques que l'on souhaite obtenir. Principalement, elle doit présenter des performances pour limiter le phénomène de retrait, une adhérence quasi parfaite à la dalle de béton sous-jacente et une dureté suffisante. C'est pourquoi, on préfère utiliser des compositions comprenant au moins un liant hydraulique minéral, avantageusement un ciment Portland, et au moins un liant organique.

De préférence, la quantité de liant organique ne dépasse pas 8 % en poids et en sec de la quantité totale des autres constituants de la chape d'usure, et encore mieux, ce liant représente au plus 5 %. Ce liant organique a pour fonction d'apporter une certaine souplesse à la couche d'usure. De plus, il favorise le collage de la couche d'usure à la dalle de béton fraîchement coulée. Egalement, ce liant organique peut comprendre des polymères qui apportent en plus une fluidification de la couche d'usure. Ces polymères doivent être compatibles avec les liants hydrauliques minéraux, en particulier pouvoir coalescer en milieu alcalin. De préférence, on choisit un polymère d'acétate de vinyle, de préférence encore un copolymère d'acétate de vinyle et d'éthylène, tel que le produit commercialisé par la société WACKER sous le nom VINNAPAS LL 222.

Les granulats de la couche d'usure doivent présenter une courbe granulométrique dont le diamètre maximum des granulats n'est pas supérieur au tiers de l'épaisseur de la couche d'usure que l'on veut obtenir. Cette courbe granulométrique est comprise entre 0 et 5 mm, de préférence entre 0 et 2 mm.

La résistance en compression de la couche d'usure est au minimum de 20 MPa à 28 jours. Cette résistance minimale est suffisante pour supporter un trafic piétonnier sur des sols abrités de lieux publics, d'écoles... Par contre, on peut élaborer une composition pour une couche d'usure permettant d'atteindre, à 28 jours, une résistance en compression de 50 MPa, jusqu'à 70 MPa ou plus. Cette résistance est obtenue notamment grâce à l'emploi de sables siliceux. Dans ces conditions les propriétés mécaniques du revêtement se révèlent être particulièrement performantes. Cette couche d'usure très résistante présente un intérêt particulier pour les sols industriels.

La couche d'usure durcit rapidement du fait de l'exothermie de la dalle de béton et de son propre dégagement de chaleur.

Pour diriger et conformer la fissuration due au retrait, dès que le sol obtenu, qui comprend une dalle en béton et une couche d'usure, présente une consistance suffisante, on réalise la découpe des joints de fractionnement. Cette opération est prescrite par le Document Technique Unifié (DTU) de Septembre 1982 (cahier 1794 n°26.2 « Chapes et dalles à base de liant organique »). Les joints sont sciés environ tous les 25 m², près des piliers, regards, pas de porte, angles saillants, etc. On crée de cette manière dans le béton des zones de moindre résistance. Ainsi, le béton peut se fissurer préférentiellement de façon nette et droite dans ces joints de fractionnement.

A l'issue de la découpe des joints, on peut appliquer une autre couche de revêtement et notamment une couche de finition faisant office de produit de cure. N'importe quel produit de cure peut convenir, sous réserve que ce produit soit compatible avec l'eau présente dans la couche d'usure et soit compatible avec le milieu alcalin de la couche d'usure. En d'autres termes, il doit présenter une affinité physique et chimique avec le ciment et avec la phase aqueuse. On utilise, de manière avantageuse, un produit à base d'une résine époxydique. De préférence encore, le durcisseur est de type polyamidoamine (ou polyamide). Une fois étendu, ce produit permet d'obtenir une porosité spécialement étudiée pour permettre de limiter l'évaporation de l'eau de la couche d'usure, l'eau de la dalle de béton sous-jacente. Ce produit présente des performances qui permettent de minimiser la fissuration. En effet, si l'évaporation est trop rapide, des amorces de fissuration apparaissent. L'homme du métier sait par expérience que dans le cas des mortiers, l'évaporation trop rapide de l'eau fait diminuer la cohésion de la couche. Ce produit a une fourchette de viscosité étudiée pour imprégner et pour pénétrer correctement la couche d'usure. Pour ce faire, sa viscosité est avantageusement inférieure à 3 MPa.s. Ainsi, l'imprégnation de la couche d'usure peut être de l'ordre de 1 mm. Ceci confère à la deuxième couche de revêtement sa résistance à l'arrachement. Ce produit augmente la dureté de la surface notamment sa résistance au ripement, car après application et séchage, on obtient une surface parfaitement lisse et dure. Ce produit bouche les pores présent à la surface de la couche d'usure. Cette dernière propriété permet de garder des sols très propres et de faciliter le nettoyage sans qu'il y ait d'incrustation de poussière. Enfin, ce produit confère une esthétique de surface, le sol obtenu reluit. On peut le colorer avec toutes les teintes désirées.

Avantageusement, la résine époxydique est liquide et à base de bisphénol-A. Son poids moléculaire moyen est de 300 à 500 g/mole. Dans la résine époxydique, un diluant réactif participant à la réaction de réticulation est de préférence prévu. Le solvant peut être constitué d'un ou de plusieurs solvants polaires utilisés pour réaliser une affinité avec l'eau de la couche d'usure. Les solvants sont préférentiellement à base d'éthers de glycol auxquels on peut ajouter notamment des solvants aromatiques et cétoniques. On pourrait éventuellement utiliser une résine époxydique en phase aqueuse. Le durcisseur est de préférence du type polyamidoamine, on peut néanmoins utiliser un durcisseur du type polyamine. Le rapport de la quantité de durcisseur sur la quantité de résine est fonction des caractéristiques recherchées pour la couche de revêtement et notamment du type de résistances chimiques visées. La température de mise en place de la couche de revêtement doit être supérieure à +8°C, sinon la résine ne polymérise pas.

Grâce au procédé selon l'invention, on obtient une accélération considérable de la vitesse de réalisation des sols neufs ou rénovés jusqu'à 500 m² par jour, pour obtenir le sol avec dalle et deux couches de revêtement, auquel il faut rajouter une période de 4 à 8 jours jusqu'à la remise en service. Avec les techniques classiques, on arrive à 500 m² en 28 jours, pour obtenir la dalle de béton, temps auquel il faut ajouter 15 jours pour obtenir la dalle et la couche d'usure, et auquel il faut ajouter encore 8 jours pour obtenir le sol avec dalle, couche d'usure et la deuxième couche de revêtement, jusqu'à la remise en service.

On peut également réaliser la rénovation de sols anciens. Il faut préparer la surface du béton ancien, puis couler une couche de béton dont l'épaisseur dépendra du niveau du sol que désire l'utilisateur, généralement comprise entre 4 et 10 cm, et enfin déposer la couche d'usure et, le cas échéant, la couche de finition du type de celles décrites ci-dessus.

### Exemples de réalisation

### Exemple 1 : réalisation d'un sol neuf de bâtiment.

Le fond de forme doit être réalisé par le terrassier avec de bons matériaux et doit être suffisamment compacté. On réalise un contrôle de la dureté, essais à la plaque module de Westergaard : K > 4. Si K < 4, on arme la dalle. On réalise également un contrôle de la planimétrie avec un niveau laser où la tolérance de planimétrie est de ± 1 cm.

On met en place un film de polyane d'une épaisseur minimum de 150 µm. Il permet d'éviter les remontées d'eau par capillarité. Le recouvrement des lés est de 50 cm. On met en place les coffrages extérieurs et de reprise.

Puis on coule un béton classé B25, qui comprend notamment pour 1 m³ :
- 880 kg de sable 0/3,
- 167 kg de gravier 6/10 mm,
- 460 kg de gravier 10/14 mm,
- 330 kg de gravier 14/20 mm,
- 330 kg de CPA, CEM1 52,5 selon la norme NF P15-301 de 1994,
- 40 kg de fillers,
- 170 l d'eau de gâchage,
- 1 % en poids du ciment de superplastifiant de dénomination commerciale Superplast CB 30 de la société Chryso certifié NF conforme à la norme NF P 1833.

Le rapport E/C est sensiblement égal à 0,5. La quantité d'éléments fins passant au 200 µm est de 460 kg par m³. Ces fillers peuvent être calcaire.

Après coulage de la dalle de béton de 15 cm d'épaisseur, on teste régulièrement à l'aide du pouce la dureté de la dalle de béton. Dès que le pouce ne s'enfonce plus, soit environ après 4 heures de repos, la dalle peut supporter le poids d'un homme.

On réalise alors l'opération de surfaçage (ou talochage) en une seule passe, de façon mécanique avec un appareil appelé hélicoptère.

On dépose ensuite une couche de revêtement d'une épaisseur de 1 cm. Elle est destinée à former la couche d'usure résistante.

On utilise pour le dépôt la pompe automatique connue sous la dénomination commerciale SERVAPLAN. Conformément à l'invention, la composition à partir de laquelle est faite la couche d'usure est autonivelante et autolissante. La résistance à la compression de la couche d'usure durcie est de 46 MPa à 28 jours. Elle porte la dénomination commerciale PM2 de la société OMNIPLASTIC et comprend essentiellement :
- 18 à 25 % de ciment Portland,
- 1 à 10 % de ciment alumineux,
- 5 à 25 % de fillers,
- 35 à 65 % de sables siliceux,
- 0.5 à 5 % de liant organique, à base d'un copolymère d'acétate de vinyle et d'éthylène, i.e. la poudre VINNAPAS LL 222 commercialisée par WACKER CHIMIE,
- 0.05 à 1 % de fluidifiant, à base de polyalkylèneglycol,
- 0.01 à 0.3 % de régulateur de prise.

D'autres composants tels que des colorants, des durcisseurs, des retardateurs peuvent être ajoutés à cette formulation en vue d'améliorer les caractéristiques et les performances de la couche.

On laisse sécher ce revêtement pendant environ 2 heures.

On réalise ensuite le sciage mécanique des joints.

En ce qui concerne la couche à base de résine époxydique, on utilise une composition à base de résine époxydique liquide de dénomination commerciale Eurepox 784 et de durcisseur de type polyamidoamine de dénomination commerciale Euredur 460, de la société Schering. On réalise in situ le mélange résine plus durcisseur. Pour ce faire, on mélange 3 volumes de résine pour 1 volume de durcisseur. Puis on étend au rouleau cette couche de finition. On en utilise une quantité de 180 à 200 g/m², ce qui représente une épaisseur finale de finition de 100 µm.

On peut réaliser la pose des trois couches en une seule journée sur d'importantes surfaces.

4 jours après la mise en place de cette dernière couche, le sol neuf de bâtiment peut être mis en service sans attente supplémentaire.

### Exemple 2 : réhabilitation d'un sol ancien.

L'ensemble de la surface du béton ancien est raboté puis aspiré afin d'éliminer toute partie non adhérente et d'homogénéiser la surface.

Un primaire d'adhérence ou d'accrochage est alors répandu en une couche. On en utilise 200 g/m². Ce primaire est constitué d'une dispersion aqueuse de copolymères vinyliques. On laisse sécher pendant 2 heures.

On coule une couche de béton de 5 cm d'épaisseur. La courbe granulométrique de ce béton est de 0 à 8 mm, compte tenu de la faible épaisseur. De plus, on rajoute des fibres pour améliorer la résistance à la flexion.

On réalise alors l'opération de surfaçage en une seule passe, de façon mécanique, avec un appareil appelé hélicoptère.

On applique ensuite une couche de revêtement d'une épaisseur de 1 cm. Elle est destinée à former la couche d'usure. Il s'agit de la composition décrite dans l'exemple 1 ci-dessus. Sa résistance à la compression est de 46 MPa à 28 jours.

On laisse sécher ce revêtement pendant environ 2 heures.

On réalise ensuite le sciage mécanique des joints.

Puis on étend au rouleau la couche de finition époxy-polyamide du même type qu'en 1).

4 jours après la mise en place de cette dernière couche, le sol rénové de bâtiment peut être remis en service sans attente supplémentaire.

Dans les exemples 1) et 2), la couche d'usure PM2 avec la couche de revêtement époxy durcie a les propriétés suivantes :
- densité du produit sec 2 ± 0,1 ;
- résistance à la compression à 7 jours 34 MPa, et à 28 jours 46 MPa ;
- résistance à la flexion à 7 jours 10 MPa, et à 28 jours 14 MPa ;
- dureté de surface déterminée avec l'appareil de Zwick à 7 jours 11 kg/mm², et à 28 jours 15 kg/mm² ;
- élasticité dynamique à 7 jours 22000 MPa, et à 28 jours 23000 MPa ;
- résistance au poinçonnement > 8 kg/mm² ;
- résistance aux chocs aucune dégradation avec des billes de 250 g et de 500 g ;
- résistance aux chocs coupants aucune dégradation au test du perfotest ;
- résistance à l'abrasion avec une roue acier chargée ;
- adhérence sur un béton ancien dans l'exemple 2) à 7 jours 2,5 MPa, et à 28 jours 3,1 MPa ;
- résistance aux attaques chimiques, avec acides sulfurique, chlorhydrique, nitrique, acétique, citrique à pH 5 permanent et pH 4 occasionnel, et avec nettoyants basique, chlorure de calcium ;
- résistance aux taches diverses, de vin rouge, d'huile,...

On peut améliorer encore les propriétés de résistance des sols, par exemple résistance chimique aux attaques acides, avec une couche supplémentaire par exemple de polyuréthanne, notamment dans le cas de sols destinés à l'industrie agro-alimentaire.

Le procédé de réalisation, les compositions de béton, de couche de revêtement et le sol selon l'invention ne sont pas limités par les détails des modes de réalisation et des exemples choisis pour l'illustrer. Des modifications de compositions et de caractéristiques peuvent être apportées sans pour autant sortir du cadre de l'invention.

## Revendications

1. Procédé de réalisation d'un sol, comprenant les étapes successives suivantes :
a) coulage d'une dalle de béton, dont,
- la composition du béton présente un rapport E/C compris entre 0,4 et 0,7, et dont,
- le béton atteint, une fois durci, une résistance en compression minimale supérieure ou égale à 10 MPa ;
b) dépôt d'une première couche de revêtement sur la dalle de béton,
**caractérisé en ce que** la première couche de revêtement est déposée sur la dalle de béton fraîchement coulée, le béton ayant atteint une valeur minimale de résistance à la pression égale à 0,15 kg/cm² et **en ce que** la couche de revêtement est à base d'une composition autolissante et autonivelante comprenant au moins un liant organique et au moins un liant hydraulique.

2. Procédé de réalisation d'un sol, selon la revendication 1, **caractérisé en ce que** la première couche de revêtement est déposée sur la dalle de béton fraîchement coulée dès l'instant où le béton de la dalle a atteint une valeur de résistance à la pression comprise entre 0,15 kg/cm² et 0,4 kg/cm².

3. Procédé selon l'une quelconque des revendications précédentes, **caractérisé en ce que** le rapport E/C du béton de la dalle est compris entre 0,45 et 0,55.

4. Procédé selon l'une quelconque des revendications précédentes, **caractérisé en ce que** le béton atteint, une fois durci, une résistance en compression supérieure à 25 MPa.

5. Procédé selon la revendication 4, **caractérisé en ce que** le béton atteint, une fois durci, une résistance en compression supérieure à 30 MPa.

6. Procédé selon l'une des revendications précédentes, **caractérisé en ce que** la composition du béton comprend une quantité minimale de ciment de 270 kg de ciment par m³ de béton, pour une dalle de 10 à 20 cm d'épaisseur maximale et de 300 kg de ciment par m³ de béton, pour une dalle de 4 à 10 cm d'épaisseur.

7. Procédé selon la revendication 6, **caractérisé en ce que** la quantité de ciment dans la composition du béton est au plus égale à 450 kg/m³ de béton.

8. Procédé selon l'une des revendications précédentes, **caractérisé en ce que** la plasticité de la composition du béton est supérieure à 10 cm, de préférence de 15 à 21 cm, mesurée grâce au cône d'Abrams selon la norme NF P 18-451.

9. Procédé selon l'une des revendications précédentes, **caractérisé en ce que**, dans la composition du béton de la dalle, les granulats présentent une courbe granulométrique :
- de 0 à 20 mm pour une dalle d'une épaisseur comprise entre 10 et 20 cm ;
- de 0 à 8 mm pour une dalle d'une épaisseur comprise entre 4 et 10 cm.

10. Procédé selon l'une des revendications précédentes, **caractérisé en ce que** la composition du béton de la dalle présente une quantité d'éléments fins passant au tamis de 200 µm comprise entre 350 et 550 kg/m³ de béton.

11. Procédé selon la revendication 10, **caractérisé en ce que**, outre le ciment, les éléments fins sont des billes de verre, des fillers calcaires ou siliceux, ou silicocalcaires ou pouzzolaniques, des cendres volantes ou des mélanges de ceux-ci.

12. Procédé selon l'une des revendications précédentes, **caractérisé en ce que** la composition du béton de la dalle comprend au moins un agent fluidifiant.

13. Procédé selon l'une des revendications précédentes, **caractérisé en ce que** le béton comprend une armature ou **en ce que** la composition du béton de la dalle comprend des fibres.

14. Procédé selon la revendication 1, **caractérisé en ce que** la première couche de revêtement est réalisée au moyen d'une composition dont les granulats ont une courbe granulométrique comprise entre 0 et 5 mm, et de préférence comprise entre 0 et 2 mm.

15. Procédé selon l'une des revendications précédentes, **caractérisé en ce que** la première couche de revêtement est réalisée au moyen d'une composition permettant d'atteindre, une fois durcie, une résistance en compression minimale de l'ordre de 20 MPa.

16. Procédé selon la revendication 14, **caractérisé en ce que** les granulats de la première couche de revêtement comprennent des sables siliceux.

17. Procédé selon l'une des revendications 14 à 16, **caractérisé en ce que** le liant organique est à base d'un polymère d'acétate de vinyle, de préférence à base d'un copolymère d'acétate de vinyle et d'éthylène.

18. Procédé selon l'une des revendications précédentes, **caractérisé en ce que** la première couche de revêtement possède une épaisseur supérieure ou égale à 5 mm et inférieure à 30 mm.

19. Procédé selon l'une des revendications précédentes, **caractérisé en ce que** l'on réalise une opération de surfaçage de la dalle de béton avant le dépôt de la première couche de revêtement, de façon à supprimer les irrégularités et de façon à homogénéiser la surface.

20. Procédé selon l'une des revendications précédentes, **caractérisé en ce que** l'on dépose une deuxième couche de revêtement sur la première couche de revêtement et **en ce que** la composition de la deuxième couche de revêtement comprend une résine époxydique et un durcisseur de type polyamidoamine.

21. Procédé selon la revendication 20, **caractérisé en ce que** la composition de la deuxième couche de revêtement comprend un ou plusieurs solvants polaires.

## Claims

1. Process for the production of a floor, **characterized in that** the following successive stages are carried out:
a) pouring of a concrete slab, of which
- the composition of the concrete has an E/C ratio of between 0.4 and 0.7, and of which
- once hardened, the concrete attains a minimum compression strength that is greater than or equal to 10 MPa;
b) deposition of a first covering layer on the concrete slab, wherein the first covering layer is deposited on the freshly poured concrete slab, wherein the concrete attained a minimum value of pression resistance equal to 0,15 kg/cm² and wherein the covering layer has a base. of a self-smoothing or self-leveling composition comprising at least an organic binder and at least a hydraulic binder.

2. Process for the production of a floor according to claim 1, **characterized in that** the first covering layer is deposited on the freshly poured concrete slab as soon as the concrete of the slab has reached a pressure resistance value of between 0.15 kg/cm² and 0.4 kg/cm².

3. Process according to any of the preceding claims, wherein the E/C ratio of the concrete of the slab is between 0.45 and 0.55.

4. Process according to any of the preceding claims, wherein, once hardened, the concrete attains a compression strength that is greater than 25 MPa.

5. Process according to claim 4, wherein, once hardened, the concrete attains a compression strength that is greater than 30 MPa.

6. Process according to one of the preceding claims, wherein the composition of the concrete comprises a minimum amount of cement of 270 kg of cement per m³ of concrete, for a slab of 10 to 20 cm of maximum thickness and of 300 kg of cement per m³ of concrete, for a slab of 4 to 10 cm of thickness.

7. Process according to claim 6, wherein the amount of cement in the composition of the concrete is at most equal to 450 kg/m³ of concrete.

8. Process according to one of the preceding claims, wherein the plasticity of the composition of the concrete is greater than 10 cm, preferably from 15 to 21 cm, measured using the Abrams cone according to standard NF P 18-451.

9. Process according to one of the preceding claims, wherein in the composition of the concrete of the slab, the aggregates exhibit a granulometric curve:
- from 0 to 20 mm for a slab with a thickness of between 10 and 20 cm;
- from 0 to 8 mm for a slab with a thickness of between 4 and 10 cm.

10. Process according to one of the preceding claims, wherein the composition of the concrete of the slab has an amount of fines that pass through a 200 µm sieve of between 350 and 550 kg/m³ of concrete.

11. Process according to claim 10, wherein in addition to the cement, the fines are glass balls, limestone or silica fillers, or siliceous limestone or pouzzolanic fillers, flyash or mixtures of the latter.

12. Process according to one of the preceding claims, wherein the composition of the concrete of the slab comprises at least one fluidizing agent.

13. Process according to one of the preceding claims, wherein the concrete comprises a reinforcement or wherein the composition of the concrete of the slab comprises fibers.

14. Process according to claim 1, wherein the first covering layer is produced with a composition whose aggregates have a granulometric curve of between 0 and 5 mm and preferably between 0 and 2 mm.

15. Process according to one of the preceding claims, wherein the fist covering layer is produced with a composition that makes it possible to attain, once hardened, a minimum compression strength on the order of 20 MPa.

16. Process according to claim 4, wherein the aggregates of the first covering layer comprise siliceous sands.

17. Process according to one of claims 14 to 16, wherein the organic binder has a vinyl acetate polymer base, preferably an ethylene and vinyl acetate copolymer base.

18. Process according to one of the preceding claims, wherein the first covering layer has a thickness that is greater than or equal to 5 mm and less than 30 mm.

19. Process according to one of the preceding claims, wherein the surfacing operation of the concrete slab is carried out before the first covering layer is deposited to eliminate unevenness and to make the surface uniform.

20. Process according to one of the preceding claims, wherein a second covering layer is deposited on the first covering layer and wherein the composition of the second covering layer comprises an epoxy resin and a polyamidoamine type hardening agent.

21. Process according to claim 20, wherein the composition of the second covering layer comprises one or more polar solvents.

## Patentansprüche

1. Verfahren zur Herstellung eines Fußbodens, umfassend die folgenden sukzessiven Schritte:
a) Gießen einer Betonplatte, wobei
- die Zusammensetzung des Betons ein Wasserzementverhältnis zwischen einschließlich 0,4 und 0,7 aufweist, und wobei
- der Beton, nachdem er ausgehärtet ist, eine minimale Druckfestigkeit von größer gleich 10 MPa erreicht;
b) Auftragen einer ersten Überzugsschicht auf der Betonplatte,
**dadurch gekennzeichnet, dass** die erste Überzugsschicht auf der frisch gegossenen Betonplatte aufgebracht wird, wenn der Beton eine minimale Druckfestigkeit von 0,15 kg/cm² erreicht hat, und **dadurch gekennzeichnet, dass** die Überzugsschicht auf einer selbst glättenden und selbst nivellierenden Zusammensetzung beruht, die wenigstens ein organisches Bindemittel und wenigstens ein hydraulische Bindemittel umfasst.

2. Verfahren zur Herstellung eines Fußbodens nach Anspruch 1, **dadurch gekennzeichnet, dass** die erste Überzugsschicht auf der frisch gegossenen Betonplatte ab dem Zeitpunkt aufgebracht wird, an dem der Beton der Platte einen Wert der Druckfestigkeit zwischen einschließlich 0,15 kg/cm² und 0,4 kg/cm² erreicht hat.

3. Verfahren nach einem der vorherigen Ansprüche, **dadurch gekennzeichnet, dass** das Wasserzementverhältnis des Betons der Platte zwischen einschließlich 0,45 und 0,55 liegt.

4. Verfahren nach einem der vorherigen Ansprüche, **dadurch gekennzeichnet, dass** der Beton nach der Aushärtung eine Druckfestigkeit von mehr als 25 MPa erreicht.

5. Verfahren nach Anspruch 4, **dadurch gekennzeichnet, dass** der Beton nach der Aushärtung eine Druckfestigkeit von mehr als 30 MPa erreicht.

6. Verfahren nach einem der vorherigen Ansprüche, **dadurch gekennzeichnet, dass** die Zusammensetzung des Betons eine minimale Zementmenge von 270 kg pro m³ Beton für eine Platte mit einer maximalen Dicke von 10 bis 20 cm und 300 kg Zement pro m³ Beton für eine Platte mit einer Dicke von 4 bis 10 cm umfasst.

7. Verfahren nach Anspruch 6, **dadurch gekennzeichnet, dass** die Zementmenge in der Zusammensetzung des Betons höchstens gleich 450 kg/m³ Beton ist.

8. Verfahren nach einem der vorherigen Ansprüche, **dadurch gekennzeichnet, dass** die Plastizität der Zusammensetzung des Betons höher als 10 cm ist und vorzugsweise zwischen 15 und 21 cm liegt, wobei diese mit dem Abrams-Trichter gemäß der Norm NF P 18-451 gemessen wird.

9. Verfahren nach einem der vorherigen Ansprüche, **dadurch gekennzeichnet, dass** in der Zusammensetzung des Betons der Platte folgende Kornverteilungskurve aufweisen:
- von 0 bis 20 mm für eine Platte mit einer Dicke zwischen einschließlich 10 und 20 cm;
- von 0 bis 8 mm für eine Platte mit einer Dicke zwischen einschließlich 4 und 10 cm.

10. Verfahren nach einem der vorherigen Ansprüche, **dadurch gekennzeichnet, dass** die Zusammensetzung des Betons der Platte eine Menge von feinen Elementen, die ein Sieb von 200 µm passieren, zwischen einschließlich 350 und 550 kg/m³ Beton aufweist.

11. Verfahren nach Anspruch 10, **dadurch gekennzeichnet, dass** die feinen Elemente neben Zement aus Glaskügelchen, kalkhaltigem oder siliziumhaltigem Füllmaterial, Füllmaterial aus SiO₂-reichem Kalkstein, puzzolanerdehaltigem Füllmaterial, Flugstaub oder Mischungen dieser Materialien bestehen.

12. Verfahren nach einem der vorherigen Ansprüche, **dadurch gekennzeichnet, dass** die Zusammensetzung des Betons der Platte wenigstens ein Verflüssigungsmittel umfasst.

13. Verfahren nach einem der vorherigen Ansprüche, **dadurch gekennzeichnet, dass** der Beton eine Armierung umfasst, oder **dadurch gekennzeichnet, dass** die Zusammensetzung des Betons der Platte Fasern umfasst.

14. Verfahren nach Anspruch 1, **dadurch gekennzeichnet, dass** die erste Überzugsschicht mit Hilfe einer Zusammensetzung hergestellt wird, wobei die Zuschläge eine Kornverteilungskurve zwischen einschließlich 0 und 5 mm und vorzugsweise zwischen einschließlich 0 und 2 mm haben.

15. Verfahren nach einem der vorherigen Ansprüche, **dadurch gekennzeichnet, dass** die erste Überzugsschicht mit Hilfe einer Zusammensetzung hergestellt wird, die es ermöglicht, nach der Aushärtung eine minimale Druckfestigkeit der Größenordnung von 20 MPa zu erreichen.

16. Verfahren nach Anspruch 14, **dadurch gekennzeichnet, dass** die Zuschläge der ersten Überzugsschicht siliziumhaltige Sande umfassen.

17. Verfahren nach einem der Ansprüche 14 bis 16, **dadurch gekennzeichnet, dass** das organische Bindemittel auf einem Polymer des Vinylacetats und vorzugsweise auf einem Kopolymer des Vinylacetats und des Ethylens beruht.

18. Verfähren nach einem der vorherigen Ansprüche, **dadurch gekennzeichnet, dass** die erste Überzugsschicht eine Dicke von größer gleich 5 mm und kleiner 30 mm besitzt.

19. Verfahren nach einem der vorherigen Ansprüche, **dadurch gekennzeichnet, dass** man einen Arbeitsgang zur Oberflächenbehandlung der Betonplatte vor dem Auftragen der ersten Überzugsschicht durchführt, um die Unebenheiten zu beseitigen und die Oberfläche zu vereinheitlichen.

20. Verfahren nach einem der vorherigen Ansprüche, **dadurch gekennzeichnet, dass** jman eine zweite Überzugsschicht auf der ersten Überzugsschicht aufbringt, und **dadurch gekennzeichnet, dass** die Zusammensetzung der zweiten Überzugsschicht ein Epoxydharz und ein Härtemittel des Polyamidoamintyps umfasst.

21. Verfahren nach Anspruch 20, **dadurch gekennzeichnet, dass** die Zusammensetzung der zweiten Überzugsschicht ein oder mehrere polare Lösungsmittel umfasst.
